(19) Europäisches Patentamt
European Patent Office
Office européen des brevets

(11) **EP 3 869 583 A1**

(12) **EUROPEAN PATENT APPLICATION**

(43) Date of publication:
**25.08.2021 Bulletin 2021/34**

(21) Application number: **20158819.1**

(22) Date of filing: **21.02.2020**

(51) Int Cl.:
*H01M 4/04* (2006.01)          *H01M 4/131* (2010.01)
*H01M 4/1391* (2010.01)       *H01M 4/525* (2010.01)
*H01M 4/62* (2006.01)          *H01M 10/0562* (2010.01)
*H01M 4/36* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **BASF SE
67056 Ludwigshafen am Rhein (DE)**

• **Karlsruher Institut für Technologie
76131 Karlsruhe (DE)**

(72) Inventor: **The designation of the inventor has not yet been filed**

(74) Representative: **BASF IP Association
BASF SE
GBI-C006
67056 Ludwigshafen (DE)**

(54) **ALL-SOLID-STATE ELECTROCHEMICAL CELL AND METHOD FOR MANUFACTURING THE SAME**

(57)    All-solid-state lithium-ion electrochemical cell comprising
(A) a cathode comprising
(a) a particulate electrode active material according to general formula $Li_{1+x}TM_{1-x}O_2$, wherein TM is Ni and, optionally, at least one of Co and Mn, and, optionally, at least one element selected from Al, Mg, Ba and B, transition metals other than Ni, Co, and Mn, and x is in the range of from zero to 0.2, wherein at least 50 mole-% of the transition metal of TM is Ni, wherein the particles of said electrode active material are at least partially coated with a boron oxide species and wherein said particulate electrode active material has an average particle diameter (D50) in the range of from 2 to 15 $\mu$m,

(B) an anode, and
(C) a solid electrolyte comprising lithium, sulfur and phosphorus.

EP 3 869 583 A1

**Description**

The present invention is directed towards an all-solid-state lithium-ion electrochemical cell comprising

(A) a cathode comprising
(a) a particulate electrode active material according to general formula $Li_{1+x}TM_{1-x}O_2$, wherein TM is Ni and, optionally, at least one of Co and Mn, and, optionally, at least one element selected from Al, Mg, Ba and B, transition metals other than Ni, Co, and Mn, and x is in the range of from zero to 0.2, wherein at least 50 mole-% of the transition metal of TM is Ni, wherein the particles of said electrode active material are at least partially coated with a boron oxide species and wherein said particulate electrode active material has an average particle diameter (D50) in the range of from 2 to 15 $\mu$m,
(B) an anode, and
(C) a solid electrolyte comprising lithium, sulfur and phosphorus.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

One problem of lithium ion batteries lies in undesired reactions on the surface of the cathode active materials. Such reactions may be a decomposition of the electrolyte or the solvent or both. It has thus been tried to protect the surface without hindering the lithium ion exchange during charging and discharging. Examples are attempts to coat the surface of the cathode active materials with, e.g., aluminium oxide or calcium oxide, see, e.g., US 8,993,051.

Another attempt to resolve the above problem is by using all-solid-state lithium-ion electrochemical cells, also called solid state lithium-ion cells. In such all-solid-state lithium-ion electrochemical cells, an electrolyte that is solid at ambient temperature is used. As electrolytes, certain materials based on lithium, sulfur and phosphorus have been recommended. However, side reactions of the electrolyte are still not excluded.

It has, on the other hand, also been reported that solid electrolytes based on lithium, sulfur and phosphorus may be incompatible with a nickel-containing complex layered oxide cathode material or other metal oxide cathode material when in direct contact with such cathode material, thereby impeding reversible operation of a respective solid-state or all solid-state lithium-ion electrochemical cell (battery) in certain cases. Several attempts have therefore been made to avoid direct contact between a nickel-containing layered oxide cathode material or other metal oxide cathode material and a respective solid electrolyte, e.g. by covering the oxidic cathode material on its surface with a shell or coating of certain materials, thus aiming at obtaining high oxidative stability and at the same time high lithium-ion conductivity of the oxidic cathode material and to so achieve or improve stable cycling performance of a solid-state or all solid-state lithium-ion electrochemical cell comprising said aforementioned components.

It was therefore an objective of the present invention to provide a lithium-ion electrochemical cell that overcomes the disadvantages of the prior art systems, and it was an objective to provide a process for manufacture of such lithium-ion electrochemical cells.

Accordingly, the all-solid-state lithium-ion electrochemical cells as defined at the outset have been found, hereinafter also defined as inventive electrochemical cells. In the context of the present invention, the terms all-solid-state lithium-ion electrochemical cells and solid-state lithium-ion electrochemical cells will be used interchangeably.

Inventive electrochemical cells comprise

(A) a cathode comprising
(a) a particulate electrode active material according to general formula $Li_{1+x}TM_{1-x}O_2$, hereinafter also referred to as electrode active material (a), wherein TM is Ni and, optionally, at least one of Co and Mn, and, optionally, at least one element selected from Al, Mg, Ba and B, transition metals other than Ni, Co, and Mn, and x is in the range of from zero to 0.2, wherein at least 50 mole-% of the transition metal of TM is Ni, wherein the particles of said electrode active material are at least partially coated with a boron oxide species and wherein said particulate electrode active material has an average particle diameter (D50) in the range of from 2 to 15 $\mu$m,

Particulate electrode active material according to general formula $Li_{1+x}TM_{1-x}O_2$ may be selected from lithiated nickel-cobalt aluminum oxides, lithiated nickel-manganese oxides, and lithiated layered nickel-cobalt-manganese oxides. Examples of layered nickel-cobalt-manganese oxides and lithiated nickel-manganese oxides are compounds of the general formula $Li_{1+x}(Ni_aCo_bMn_cM^1_d)_{1-x}O_2$, with $M^1$ being selected from Mg, Ca, Ba, Al, Ti, Zr, Zn, Mo, Nb, V and Fe, the further variables being defined as follows:

$$\text{zero} \leq x \leq 0.2$$

$0.50 \leq a \leq 0.99$, preferably $0.60 \leq a \leq 0.90$,
$\text{zero} \leq b \leq 0.4$, preferably $\text{zero} < 0.2$
$0.01 \leq c \leq 0.3$, preferably $0.1 \leq c \leq$

$$\text{zero} \leq d \leq 0.1,$$

and

$$a + b + c + d = 1.$$

In a preferred embodiment, particulate electrode active materials are selected from compounds according to general formula (I)

$$(Ni_aCo_bMn_cM^1_d) \qquad (I)$$

with

a being in the range of from 0.6 to 0.99,
b being in the range of from 0.01 to 0.2,
c being in the range of from zero to 0.2, and
d being in the range of from zero to 0.1,

$M^1$ is at least one of Al, Mg, Ti, Mo, Nb, W and Zr, and

$$a + b + c = 1.$$

and the further variables are defined as above.

Examples of lithiated nickel-cobalt aluminum oxides are compounds of the general formula $Li[Ni_hCo_iAl_j]O_{2+f}$. Typical values for f, h, i and j are:

h is in the range of from 0.8 to 0.95,
i is in the range of from 0.015 to 0.19,
j is in the range of from 0.01 to 0.08, and
f is in the range of from zero to 0.4.

Particularly preferred are $Li_{(1+x)}[Ni_{0.33}Co_{0.33}Mn_{0.33}]_{(1-x)}O_2$, $Li_{(1+x)}[Ni_{0.5}Co_{0.2}Mn_{0.3}]_{(1-x)}O_2$, $Li_{(1+x)}[Ni_{0.6}Co_{0.2}Mn_{0.2}]_{(1-x)}O_2$, $Li_{(1+x)}[Ni_{0.7}Co_{0.2}Mn_{0.1}]_{(1-x)}O_2$, and $Li_{(1+x)}[Ni_{0.8}Co_{0.1}Mn_{0.1}]_{(1-x)}O_2$, each with x as defined above, and $Li[Ni_{0.88}Co_{0.065}Al_{0.055}]O_2$ and $Li[Ni_{0.91}Co_{0.045}Al_{0.045}]O_2$.

In one embodiment of the present invention particles of particulate material such as lithiated nickel-cobalt aluminum oxide or layered lithium transition metal oxide, respectively, are cohesive. That means that according to the Geldart grouping, the particulate material is difficult to fluidize and therefore qualifies for the Geldart C region. In the course of the present invention, though, mechanical stirring is not required in all embodiments.

The particulate electrode active material has an average particle diameter (D50) in the range of from 2 to 15 $\mu$m, preferably from 5 to 12 $\mu$m. The average particle diameter can be determined, e. g., by light scattering or LASER diffraction. The particles are usually composed of agglomerates from primary particles, and the above particle diameter refers to the secondary particle diameter.

In one embodiment of the present invention, said secondary particles are composed of agglomerated primary particles. Said primary particles may have a average particle diameter (D50) in the range of from 100 to 300 nm.

In one embodiment of the present invention, the particulate material has a specific surface, hereinafter also "BET surface", in the range of from 0.1 to 1.5 $m^2/g$. The BET surface may be determined by nitrogen adsorption after outgassing of the sample at 200°C for 30 minutes or more and beyond this accordance with DIN ISO 9277:2010.

Said electrode active material is at least partially coated with a boron oxide species. That means that the secondary particles of said active material is at least partially coated with a boron oxide species. Said boron oxide species may be $LiBO_2$, $Li_2B_4O_7$, or $B_2O_3$, or a boron oxide species chemically bound to the surface of said electrode active material, or a combination of at least two of the foregoing. Preferred are $B_2O_3$ and combinations of $B_2O_3$ and a boron oxide species chemically bound to the surface of said electrode active material.

In one embodiment of the present invention, inventive cathode (A) comprises in the range of from 0.01 to 0.5% by weight of B in the form of boron oxide species, calculated as B.

The term "at least partially coated" in the context with the present invention refers to at least 80% of the particles of a batch of particulate material being coated, and to at least 75% of the outer surface of each secondary particle being coated, for example 75 to 99.99 % and preferably 80 to 90%. Boron oxide species may be located at the outer surface of secondary particles and in the voids between primary particles of each secondary particle.

The thickness of such coating may be very low, for example 0.1 to 5 nm. In other embodiments, the thickness may be in the range of from 6 to 15 nm. In further embodiments, the thickness of such coating is in the range of from 16 to 50 nm. The thickness in this context refers to an average thickness determined mathematically by calculating the amount of metal alkoxide or alkyl metal compound or metal halide or metal amide per particle surface in $m^2$ and assuming a 100% conversion in steps in boron deposition.

Without wishing to be bound by any theory, it is believed that non-coated parts of particles do not react due to specific chemical properties of the particles, for example density of chemically reactive groups such as, but not limited to hydroxyl groups, oxide moieties with chemical constraint, or to adsorbed water.

Cathodes (A) comprise a cathode active material (a) in combination with conductive carbon (b) and solid electrolyte (C). Cathodes (A) further comprise a current collector, for example an aluminum foil or copper foil or indium foil, preferably an aluminum foil.

Examples of conductive carbon (b) are soot, active carbon, carbon nanotubes, graphene, and graphite, and combinations of at least two of the foregoing.

In a preferred embodiment of the present invention, inventive cathodes contain

(a) 70 to 96 % by weight cathode active material,
(b) 2 to 10 % by weight of conductive carbon,
(C) 2 to 28 % by weight of solid electrolyte,

percentages referring to the sum of (a), (b) and (C).

Said anode (B) contains at least one anode active material, such as silicon, tin, indium, silicon-tin alloys, carbon (graphite), $TiO_2$, lithium titanium oxide, for example $Li_4Ti_5O_{12}$ or $Li_7Ti_5O_{12}$ or combinations of at least two of the foregoing. Said anode may additionally contain a current collector, for example a metal foil such as a copper foil.

Inventive electrochemical cells further comprise
(C) a solid electrolyte comprising lithium, sulfur and phosphorus, hereinafter also referred to as electrolyte (C) or solid electrolyte (C).

In this context, the term "solid" refers to the state of matter at ambient temperature.

In one embodiment of the present invention, solid electrolyte (C) has a lithium-ion conductivity at 25 °C of $\geq$ 0.1 mS/cm, preferably in the range of from 0.1 to 30 mS/cm, measurable by, e.g., impedance spectroscopy.

In one embodiment of the present invention, solid electrolyte (C) comprises $Li_3PS_4$, yet more preferably orthorhombic $\beta$-$Li_3PS_4$.

In one embodiment of the present invention, solid electrolyte (C) is selected from the group consisting of $Li_2S$-$P_2S_5$, $Li_2S$-$P_2S_5$-$LiI$, $Li_2S$-$P_2S_5$-$Li_2O$, $Li_2S$-$P_2S_5$-$Li_2O$-$LiI$, $Li_2S$-$SiS_2$-$P_2S_5$-$LiI$, $Li_2S$-$P_2S_5$-$Z_mS_n$ wherein m and n are positive numbers and Z is a member selected from the group consisting of germanium, gallium and zinc), $Li_2S$-$SiS_2$-$Li_3PO_4$, $Li_2S$-$SiS_2$-$Li_yPO_z$, wherein y and z are positive numbers, $Li_7P_3S_{11}$, $Li_3PS_4$, $Li_{11}S_2PS_{12}$, $Li_7P_2S_8I$, and $Li_{7-r-2s}PS_{6-r-s}X_r$ wherein X is chlorine, bromine or iodine, and the variables are defined as follows:

$0.8 \leq r \leq 1.7$
$0 \leq s \leq (-0.25\ r) + 0.5$.

In one embodiment of the present invention, electrolyte (C) is doped with at least one of Si, Sb, Sn. Si is preferably provided as element. Sb and Sn are preferably provided as sulfides.

In one embodiment of the present invention, inventive electrochemical cells comprise solid electrolyte (C) in a total amount of from 1 to 50 % by weight, preferably of from 3 to 30 % by weight, relative to the total mass of the cathode (A).

Inventive electrochemical cells further contain a housing.

Inventive electrochemical cells may be operated - charged and discharged - with an internal pressure in the range of from 0.1 to 300 MPa, preferably 1 to 100 MPa.

Inventive electrochemical cells may be operated at a temperature in the range of from -50°C to +200°C, preferably from -30°C to +120°C.

Inventive electrochemical cells show excellent properties even after multiple cycling, including very low capacity fading.

A further aspect of the present invention relates to a process for making inventive electrochemical cells, hereinafter also referred to as inventive process. The inventive process comprises the steps of

(β) mixing an electrode active material (a) with carbon in electrically conductive form (b) and a binder (c),

(γ) applying the mixture resulting from step (α) to a current collector.

Electrode active material (a) with carbon in electrically conductive form (b) and a binder (c) have been described above. By the above steps, a cathode (A) is obtained.

Step (β) may be performed in a mill, for example a ball mill.

Step (γ) may be performed with a squeegee, with a doctor blade, by drop casting, spin coating, spray coating or by compressing a dry powder in a die or in a mold.

In one embodiment of the present invention, the inventive process includes the manufacture of an electrode active material (a) by

(α1) subjecting particulate electrode active material according to general formula $Li_{1+x}TM_{1-x}O_2$ to a solution of a borane or a Lewis-base complex of a borane in an organic solvent, followed by

(α2) treatment with an oxygen-containing gas.

Step (α1) is performed by subjecting particulate electrode active material according to general formula $Li_{1+x}TM_{1-x}O_2$ to a solution of a borane or a Lewis-base complex of a borane in an organic solvent, for example by adding a solution of a borane or a Lewis-base complex of a borane in an organic solvent to particulate electrode active material according to general formula $Li_{1+x}TM_{1-x}O_2$ or by adding particulate electrode active material according to general formula $Li_{1+x}TM_{1-x}O_2$ to a solution of a borane or a Lewis-base complex of a borane in an organic solvent. In this context, a solution refers to a solution in an organic solvent, preferably an aprotic solvent such as, but not limited to ethers, cyclic or non-cyclic, cyclic and acyclic acetals, aromatic hydrocarbons such as toluene, non-aromatic cyclic hydrocarbons such as cyclohexane and cyclopentane.

Examples of cyclic acetals are 1,3-dioxane and in particular 1,3-dioxolane. Examples of acyclic acetals are 1,1-dimethoxyethane, 1,1-diethoxyethane, and diethoxymethane.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran ("THF") and 1,4-dioxane.

Examples of boranes are diborane, $B_2H_6$. Examples of Lewis-base complexes of a borane in an organic solvent are $BH_3$-$O(C_2H_5)_2$, and $BH_3$-THF, each in an organic solvent such as toluene, non-cyclic ethers such as diethyl ether, and cyclic ethers such as THF and 1,4-dioxane. Further examples of Lewis-base complexes of a borane are $BH_3$-$NH_3$, $BH_3$-$N(CH_3)_3$, and $BH_3$-pyridine.

Preferably, step (α1) is performed with an ether as solvent.

In one embodiment of the present invention, step (α1) is performed at a temperature in the range of from zero to 120°C, preferably 10 to 50°C. Preferably, step (α1) is performed at a temperature below the boiling point of the solvent.

In on embodiment of the present invention, the duration of step (α1) is in the range of from 1 second to 24 hours, preferably 60 seconds to 10 hours.

In one embodiment of the present invention, the residual moisture content of particulate electrode active material according to general formula $Li_{1+x}TM_{1-x}O_2$ before treatment according to step (α1) is in the range of from 50 to 2,000 ppm, preferably from 100 to 400 ppm. The residual moisture content may be determined by Karl-Fischer titration.

In one embodiment of the present invention, the extractable lithium content of particulate electrode active material according to general formula $Li_{1+x}TM_{1-x}O_2$ before treatment according to step (α1) is in the range of from zero to 20 mole-% of the total lithium content. The extractable lithium content may be determined by dispersing electrode active material according to general formula $Li_{1+x}TM_{1-x}O_2$ before treatment according to step (α1) in a pre-determined amount of aqueous HCl, for example in a pre-determined amount of aqueous 0.1 M HCl, followed by titration with base.

After completion of step (α1) solvent and - if applicable - non-reacted borane is removed by a solid-liquid separation method, for example by decanting or by filtration. In embodiments were a filtration is applied, the resulting filter cake may be dried, for example at reduced pressure and at a temperature in the range of from 50 to 120°C.

In one embodiment of the present invention, step (α2) is performed at a temperature in the range of from 150 to 500°C.

In one embodiment of the present invention, step (α2) is performed under air, oxygen-enriched air or pure oxygen as oxygen-containing gas.

In one embodiment of the present invention, step (α2) has a duration in the range of from 1 second to 24 hours, preferably 10 minutes to 10 hours.

In one embodiment of the present invention, step (α2) is performed in a rotary kiln, in a rotary hearth kiln or in a pusher kiln. In laboratory scale embodiments, step (α2) may be performed in an oven such as a muffle oven.

The inventive process may further comprise the following steps:

providing an anode (B) and a solid electrolyte (C),

and assembling cathode (A), anode (B) and a solid electrolyte (C) in a housing, optionally with a separator. Preferably, an extra layer of solid electrolyte (C) may serve as separator, and no separators such as ethylene-propylene copolymers are required.

However, it is preferred to first combine solid electrolyte (C) with a cathode active material (a), for example by mixing or milling, in a mixer or in an extruder. Then, anode (B) and, if applicable, a separator are added and the combined cathode (A), anode (B) and a solid electrolyte (C) as separator are arranged in a housing.

It is even more preferred to first combine some solid electrolyte (C) with a cathode active material (a), for example by co-milling and subsequent compression, and separately combining an anode active material with solid electrolyte (C) and conductive carbon, for example by co-milling and subsequent compression, and to then combine a layer of the above cathode (A) and a layer of anode (B) and a further layer of solid electrolyte (C) under a pressure of from 1 to 450 MPa, preferably of from 50 to 450 MPa and more preferably of from 75 to 400 MPa.

A further aspect of the present invention relates to cathodes (A) comprising

(a) a particulate electrode active material according to general formula $Li_{1+x}TM_{1-x}O_2$, wherein TM is Ni and, optionally, at least one of Co and Mn, and, optionally, at least one element selected from Al, Mg, Ba and B, transition metals other than Ni, Co, and Mn, and x is in the range of from zero to 0.2, wherein at least 50 mole-% of the transition metal of TM is Ni, wherein the particles of said electrode active material are at least partially coated with a boron oxide species and wherein said particulate electrode active material has an average particle diameter (D50) in the range of from 2 to 15 $\mu$m,

(b) carbon in electrically conductive form, and

(C) a solid electrolyte comprising lithium, sulfur and phosphorus.

Particulate electrode active material (a), carbon (b) and solid electrolyte (C) have been described above.

Optionally, a binder (c) may be present. Optionally, a current collector may be present.

The invention is further illustrated by working examples.

General remarks:

Step (α1) was performed under argon atmosphere. The solvent THF was obtained from Fuji Film Company, $\leq$ 10 ppm $H_2O$.

1.1. Providing a precursor for cathode active materials

As TM-OH.1, a co-precipitated hydroxide of Ni, Co and Mn was used, spherical particles, average particle diameter (D50) 5.9 $\mu$m, determined by LASER diffraction, uniform distribution of Ni, Co and Mn.

1.2. Manufacture of a non-treated cathode active material

C-CAM.1 (Comparative): TM.1-OH was mixed with LiOH monohydrate to obtain a Li/TM molar ratio of 1.02. The mixture was heated to 760°C and kept for 10 hours in a forced flow of a mixture of 60% oxygen and 40% nitrogen (by volume). After cooling to ambient temperature, the powder was deagglomerated and sieved through a 32 $\mu$m mesh to obtain the electrode active material C-CAM 1.

The D50 of the electrode active material C-CAM.1 was 5.85 $\mu$m, determined using the technique of LASER diffraction in a Mastersize 3000 instrument from Malvern Instruments. Residual moisture at 250 °C was determined to be 650 ppm.

1.3 Manufacture of a cathode active material (a.1) for an inventive electrochemical cell, and of a comparative cathode active material

1.3.1 Step ($\alpha$1.1)

An amount of 5 g of C-CAM.1 was dispersed in 5 ml of THF. Subsequently, 0.4 ml of a 1M solution of $BH_3$-THF in THF added, and then the resultant dispersion was stirred for 2 hours at ambient temperature. Afterwards, the solvent was removed *in vacuo* and the resulting powder was dried *in vacuo* for 12 hours.

1.3.2 Step ($\alpha$2.1)

The powder obtained from 1.3.1 was subsequently treated over a period of 2 hours at 400 °C in flowing oxygen (5 °C/min heating rate). Then, the resultant (a.1) was cooled to ambient temperature.

1.3.3 Manufacture of a comparative cathode active material

An amount of 5 g of C-CAM.1 was dispersed in 5 ml of THF. The resultant dispersion was stirred for 2 hours at ambient temperature. Afterwards, the solvent was removed *in vacuo* and the resulting powder was dried *in vacuo* for 12 hours and subsequently treated over a period of 2 hours at 400 °C in flowing oxygen (5 °C/min heating rate). Then, the resultant C-(a.2) was cooled to ambient temperature.

II. Manufacture of cathodes

11.1 Manufacture of a cathode (A.1) for an inventive electrochemical cell

The cathode composite powder was manufactured by milling 1 g mixture of

(a.1) as cathode active material,
(b.1) Super C65 carbon black (Timcal), and
(C.1) $Li_6PS_5Cl$ (NEI Corp.) in a ratio of
(70/0.1/30 w/w/w) using 10 zirconia balls in a planetary mill at 140 rpm for 30 min under argon atmosphere. Inventive cathode (A.1) was obtained.

11.2 Manufacture of cathodes for comparative electrochemical cells

II.2.1 Manufacture of comparative cathode C-(A.2)

The cathode composite powder was manufactured by milling 1 g mixture of

C-CAM.1 as cathode active material,
(b.1) Super C65 carbon black (Timcal), and
(C.1) $Li_6PS_5Cl$ (NEI Corp.) in a ratio of
(70/0.1/30 w/w/w) using 10 zirconia balls in a planetary mill at 140 rpm for 30 min under argon atmosphere. Comparative cathode C-(A.2) was obtained.

11.2.2 Manufacture of comparative cathode C-(A.3)

The cathode composite powder was manufactured by milling 1 g mixture of

C-(a.2) as cathode active material,
(b.1) Super C65 carbon black (Timcal), and
(C.1) $Li_6PS_5Cl$ (NEI Corp.) in a ratio of
(70/0.1/30 w/w/w) using 10 zirconia balls in a planetary mill at 140 rpm for 30 min under argon atmosphere. Comparative cathode C-(A.3) was obtained.

II.3: Manufacture of an anode (B.1)

Carbon-coated $Li_4Ti_5O_{12}$ (abbreviated to "$Li_4Ti_5O_{12}$ (cc)", commercially available from NEI Corporation, was

mixed with $Li_6PS_5Cl$, (C.1), and electrically conductive carbon (as specified in table 5) in the weight ratio of 30:10:60, by milling, using 10 zirconia balls in a planetary mill at 140 rpm for 30 min under an argon atmosphere. Anode (B.1) was obtained.

III. Manufacture and electrochemical testing of inventive electrochemical cells and of comparative electrochemical cells

111.1: Manufacture of inventive electrochemical cells and of comparative electrochemical cells

General procedure:

For manufacture of solid-state electrochemical cells, an amount of 100 mg (C.1) was compressed at a pressure of 125 MPa to form a solid electrolyte pellet, then 65 mg anode (B.1) was pressed to the solid electrolyte pellet at 125 MPa, and finally either 11-12 mg cathode (A.1) or 11-12 mg comparative cathode C-(A.2) or C-(A.3) were pressed onto the other side at 375 MPa. The pellet so obtained was compressed in a cylindrical case composed of polyetheretherketone (PEEK) between two stainless steel rods.

111.2 Electrochemical testing of inventive electrochemical cells and of comparative electrochemical cells

During electrochemical testing, a pressure of 55 MPa was maintained. Galvanostatic charge/discharge measurements were performed at 45 °C and at a rate of C/20 for the initial and C/5 for subsequent cycling (1C = 190 mA/g) in the voltage range between 1.35 and 2.85 V using a MACCOR battery cycler.

The results are presented in Table 1

| Electrochemical cell based on cathode | 1st cycle discharge capacity [mA·h/g] | 1st cycle Coulombic efficiency [%] | Capacity retention after | |
|---|---|---|---|---|
| | | | 50 cycles | 100 cycles |
| (A.1) | 213.7 | 86.2 | 56.9 | 40.4 |
| C-(A.2) | 208.9 | 83.9 | 52.9 | 33.6 |
| C-(A.3) | 207.7 | 84.2 | 45.1 | 27.5 |

**Claims**

1. All-solid-state lithium-ion electrochemical cell comprising

   (A) a cathode comprising
   (a) a particulate electrode active material according to general formula $Li_{1+x}TM_{1-x}O2$, wherein TM is Ni and, optionally, at least one of Co and Mn, and, optionally, at least one element selected from Al, Mg, Ba and B, transition metals other than Ni, Co, and Mn, and x is in the range of from zero to 0.2, wherein at least 50 mole-% of the transition metal of TM is Ni, wherein the particles of said electrode active material are at least partially coated with a boron oxide species and wherein said particulate electrode active material has an average particle diameter (D50) in the range of from 2 to 15 $\mu$m,
   (B) an anode, and
   (C) a solid electrolyte comprising lithium, sulfur and phosphorus.

2. Electrochemical cell according to claim 1 wherein TM is a combination of metals according to general formula (I)

   $$(Ni_aCo_bMn_c)_{1-d}M_d \qquad (I)$$

   with

   a being in the range of from 0.6 to 0.99,
   b being in the range of from 0.01 to 0.2,
   c being in the range of from zero to 0.2, and
   d being in the range of from zero to 0.1,

M is at least one of Al, Mg, Ti, Mo, Nb, W and Zr, and
a + b + c = 1.

3. Electrochemical cell according to claim 1 or 2 wherein electrolyte (C) has a lithium-ion conductivity at 25 °C of ≥ 0.15 mS/cm.

4. Electrochemical cell according to any of the preceding claims wherein solid electrolyte (C) is a compound corresponding to formula (II)

$$Li_{7-r-2s}PS_{6-r-s}X_r \qquad (II)$$

, wherein

X is chlorine, bromine or iodine

$0.8 \leq r \leq 1.7$ and $0 \leq s \leq (-0.25 \, r) + 0.5$, or being $Li_3PS_4$.

5. Electrochemical cell according to any of the preceding claims wherein the electrode active material has a content of extractable lithium in the range of from 0.1 to 0.6 % by weight, determined by titration.

6. Process for making an all-solid-state lithium-ion electrochemical cell, comprising the step of

(β) mixing an electrode active material (a) with carbon in electrically conductive form and, optionally, with a binder,
(γ) applying the mixture resulting from step (α) to a current collector.

7. Process according to claim 6, wherein said process includes the manufacture of an electrode active material (a) by

(α1) subjecting particulate electrode active material according to general formula $Li_{1+x}TM_{1-x}O_2$ to a solution of a borane or a Lewis-base complex of a borane in an organic solvent, followed by
(α2) treatment with an oxygen-containing gas.

8. Process according to claim 6 or 7 wherein step (α1) is performed with an ether as solvent.

9. Process according to any of claims 6 to 8 wherein step (α2) is performed at a temperature in the range of from 150 to 500 °C.

10. Cathode (A) comprising

(a) a particulate electrode active material according to general formula $Li_{1+x}TM_{1-x}O_2$, wherein TM is Ni and, optionally, at least one of Co and Mn, and, optionally, at least one element selected from Al, Mg, Ba and B, transition metals other than Ni, Co, and Mn, and x is in the range of from zero to 0.2, wherein at least 50 mole-% of the transition metal of TM is Ni, wherein the particles of said electrode active material are at least partially coated with a boron oxide species and wherein said particulate electrode active material has an average particle diameter (D50) in the range of from 2 to 15 μm,
(b) carbon in electrically conductive form, and
(C) a solid electrolyte comprising lithium, sulfur and phosphorus.

11. Cathode (A), additionally comprising a binder.

Europäisches
Patentamt

European
Patent Office

Office européen
des brevets

## EUROPEAN SEARCH REPORT

Application Number

EP 20 15 8819

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/022305 A1 (MITSUI MINING & SMELTING CO [JP]) 30 January 2020 (2020-01-30) * paragraphs [0036], [0038], [0060] * * table 1 * * examples 1-4, 8, 9 * ----- | 1-6,9-11 | INV. H01M4/04 H01M4/131 H01M4/1391 H01M4/525 H01M4/62 H01M10/0562 |
| A | JP 2017 152275 A (SUMITOMO METAL MINING CO) 31 August 2017 (2017-08-31) * paragraphs [0055], [0057], [0060] * ----- | 1-11 | H01M4/36 |

TECHNICAL FIELDS
SEARCHED      (IPC)

H01M

The present search report has been drawn up for all claims

| Place of search | Date of completion of the search | Examiner |
|---|---|---|
| Munich | 12 August 2020 | Gregori, Giuliano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 15 8819

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2020

| Patent document cited in search report | | Publication date | Patent family member(s) | Publication date |
|---|---|---|---|---|
| WO 2020022305 | A1 | 30-01-2020 | NONE | |
| JP 2017152275 | A | 31-08-2017 | NONE | |

EPO FORM P0459

For more details about this annex : see Official Journal of the European Patent Office, No. 12/82

**EP 3 869 583 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8993051 B